# EUROPEAN PATENT SPECIFICATION

(11) **EP 2 192 718 B1**
(45) Date of publication and mention of the grant of the patent: **14.03.2012**
(21) Application number: 08734231.7
(22) Date of filing: 05.05.2008
(51) Int. Cl.: H04L 12/14, H04W 28/26, H04L 12/56

(54) **METHOD FOR RESERVING RESOURCES, METHOD FOR PROCESSING CHARGING FAILURE AND POLICY DECISION POINT**
VERFAHREN ZUR RESERVIERUNG VON RESSOURCEN, VERFAHREN ZUR VERARBEITUNG EINES FEHLERS BEI DER VERGEBÜHRUNG UND POLICY-ENTSCHEIDUNGSPUNKT
MÉTHODE DE RÉSERVATION DE RESSOURCES, MÉTHODE DE TRAITEMENT DE DÉFAUTS DE FACTURATION ET POINT DE DÉCISION DE POLITIQUE

(30) Priority: 28.08.2007 CN 200710145591
(43) Date of publication of application: 02.06.2010
(73) Proprietor: Huawei Technologies Co., Ltd., Longgang District, Shenzhen Guangdong 518129 (CN)
(72) Inventor: SHI, Xin, Shenzhen Guangdong 518129 (CN); GUO, Zhongjie, Shenzhen Guangdong 518129 (CN)
(74) Representative: Pfenning, Meinig & Partner GbR
(86) International application number: PCT/CN2008/070875
(87) International publication number: WO 2009/026801

(56) References cited:
- WO-A1-2004/036825
- WO-A2-2007/103450
- CN-A- 1 729 648
- CN-A- 1 795 663
- CN-A- 1 996 860
- CN-A- 101 110 681
- US-A1- 2005 026 558
- "3rd Generation Partnership Project; Technical Specification Group Services and System Aspects; Policy and charging control architecture (Release 7)" 3GPP-STANDARDS, 2500 WILSON BOULEVARD, SUITE 300, ARLINGTON, VIRGINIA 22201 USA, no. V7.3.0, 1 June 2007 (2007-06-01), XP040278232
- "Digital cellular telecommunications system (Phase 2+); Universal Mobile Telecommunications System (UMTS); Policy and charging control architecture (3GPP TS 23.203 version 7.3.0 Release 7); ETSI TS 123 203" ETSI STANDARDS, LIS, SOPHIA ANTIPOLIS CEDEX, FRANCE, vol. 3-SA2, no. V7.3.0, 1 June 2007 (2007-06-01), XP014037747 ISSN: 0000-0001
- "Universal Mobile Telecommunications System (UMTS); Overall high level functionality and architecture impacts of flow based charging; Stage 2 (3GPP TS 23.125 version 6.3.0 Release 6); ETSI TS 123 125" ETSI STANDARDS, LIS, SOPHIA ANTIPOLIS CEDEX, FRANCE, vol. 3-SA2, no. V6.3.0, 1 December 2004 (2004-12-01), XP014027500 ISSN: 0000-0001
- LUCENT TECHNOLOGIES*: "OCS - CRF reference point" 3GPP DRAFT; S2-040701 OCS-CRF REFERENCE POINT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Atlanta; 20040220, 20 February 2004 (2004-02-20), XP050247646 [retrieved on 2004-02-20]
- ETRI: "Policy Control for 3GPP-WLAN Interworking" 3GPP DRAFT; S2-051151, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Athens; 20050504, 4 May 2005 (2005-05-04), XP050252684 [retrieved on 2005-05-04]
- YAVATKAR R ET AL: "RFC 2753 A Framework for Policy-based Admission Control", INTERNET CITATION, 2000, XP002179102, Retrieved from the Internet: URL:http://www.ietf.org/rfc/rfc2753.txt?nu mber=2753 [retrieved on 2001-10-02]

## Description

### FIELD OF THE INVENTION

The present invention relates to communication charging technology, and more specifically, to methods for resource reservation, methods for handling charging failure and a policy decision point.

### BACKGROUND

Currently, in the process of charging users and providing services, the information used for reserving communication resources required by the user is originated primarily from a subscription information base, such as a Home Location Register (HLR), a Home Subscriber Server (HSS).

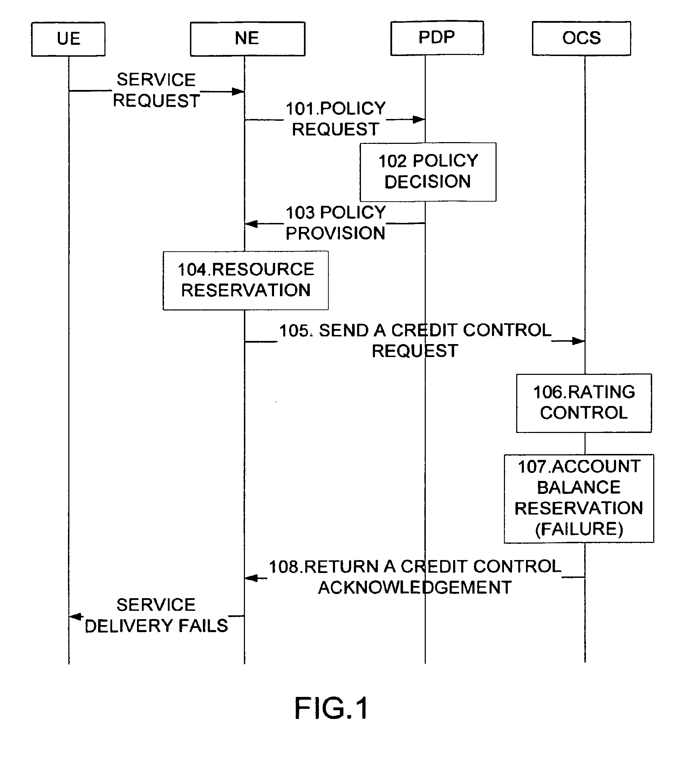

Figure 1 is an existing resource reservation procedure in normal situation. The procedure includes the following steps.

101: After a network element (NE) receives a user's service request, the network element sends a policy request to a Policy Decision Point (PDP), requesting a resource reservation policy.

The NE is a network element which provides service to a user. The NE may be a different network element in case of a different service provided. For example, the NE may be a GPRS Gateway Support Node (GGSN), a Web gateway, a multimedia messaging center, or a video server, etc.

The NE includes a Policy Enforcement Unit (PEP), configured to execute the resource reservation policy issued by the PDP and perform resource reservation.

102: The PDP makes policy decision according to information it stores, service information and user subscription information in other database.

The service information and the user subscription information are generally stored in the subscription information base. When making the resource reservation policy, the PDP interacts with the subscription information base to acquire the service information and user subscription information.

103: The PDP returns the resource reservation policy to the network element.

104: The NE applies the resource reservation policy and performs resource reservation.

105: The NE sends a Credit-Control Request (CCR) to an Online Charging System (OCS).

106: The OCS performs a rating control on a charging request.

107: The OCS performs account balance reservation. Charging fails due to insufficient account balance.

108: The OCS returns a Credit-Control Answer (CCA) to the NE, informing the NE that the authorization fails. Service delivery fails.

When researching and practicing the conventional art, it is found that the conventional art encounters below issues.

In the existing resource reservation procedure, the PDP performs resource reservation for services requested by the user in a fixed manner without considering the impact brought by the variation in the user's account data on service provision. This may result in poor customization when providing services. Moreover, in the subsequent charging processes, it is probable that the service provision may not be conducted successfully based on the resource reserved in the above manner when the user account balance is insufficient. Consequently, the service delivery fails.

A standard document 3GPP TS 23.203 version 7.3.0 Release 7 discloses that if the PCRF does not have the subscriber's subscription related information, it sends a request to the SPR in order to receive the information related to the IP-CAN session. The SPR may provide the following subscription profile information and the subscription profile information comprises subscriber's charging related information, e.g. location information relevant for charging. It also discloses that the PCRF may request notifications from the SPR on changes in the subscription information. Upon reception of a notification, the PCRF shall make the PCC decisions necessary to accommodate the change in the subscription and updates the PCEF by providing the new PCC decisions if needed.

A standard document 3GPP TS 23.125 version 6.3.0 Release 6 discloses that the Charging system may provide input to the CRF for charging rules selection.

A 3GPP draft 3GPP TSG-SA Wording Group 2 Meeting #38, S2-040701 discloses a reference Rx between the CRF and the Online Charging system.

A 3GPP draft 3GPP TSG SA WG2 Architecture-S2#46, S2-051151 discloses the Policy control for 3GPP-WLAN Interworking.

A 3GPP draft 3GPP TS 23.203 VERSION 7.3.0 Release 7 discloses that a reference point Gy between the OCS and the PCEF, and a reference point Gx between the GW and Policy and Charging Rules Function.

A draft of "RFC 2753 A Framework for policy-based Admission Control" discloses that the PDP might optionally contact other external servers, e.g. accounting/billing databases, and the PDP may, at any time, send asynchronous notifications to the PEP to change an earlier decision or to generate a policy error/warning message.

### SUMMARY

Various embodiments of the present invention are directed to providing a method for resource reservation, a method for handling a charging failure, and a policy decision point. As a result, the resource reservation procedure may be more customer-friendly and the possibility of a successful service delivery is improved.

A method for resource reservation according to one embodiment of the present invention includes: receiving, by a network element, a service request of a user, and requesting a resource reservation policy from a policy decision point; making, by the policy decision point, a resource reservation policy according to account data of the user and returning the resource reservation policy to the network element, wherein the account data of the user comprises account balance and/or reward resources and/or credit limit; and applying, by the network element, the resource reservation policy and performing resource reservation for the user, wherein before the policy decision point makes the resource reservation policy according to the account data of the user, the method further comprises: interacting, by the policy decision point, with a charging system; and obtaining the account data of the user sending, by the network element, to a charging system an online charging request for charging for a service provided to the user; charging, by the charging system, a user account and returning a service quota to the network element; and providing, by the network element, the service for the user according to the service quota; sending, by the charging system, an updated account data to the policy decision point if a variation in the account data of the user reaches a predetermined threshold; re-making, by the policy decision point, a resource reservation policy according to the updated account data of the user and returning the re-made resource reservation policy to the network element; and applying, by the network element, the re-made resource reservation policy and adjusting the resource reserved for the user.

A communication system according to one embodiment of the present invention includes a network element and a policy decision point. The network element is configured to receive a service request of a user, request a resource reservation policy from the policy decision point, apply the resource reservation policy returned from the policy decision point and perform resource reservation for the user. The policy decision point is configured to make the resource reservation policy according to account data of the user and return the resource reservation policy to the network element, and the policy decision point comprises: a receiving unit, a policy making unit, an account data acquiring unit and a policy issuing unit, wherein the receiving unit is configured to receive a policy decision request sent by a network element; the policy making unit is configured to make a resource reservation policy according to account data of a user, wherein the account data of the user comprises account balance and/or reward resources and/or credit limit; the policy issuing unit is configured to return the resource reservation policy made by the policy making unit to the network element; and the account data acquiring unit is configured to interact with a charging system to acquire the account data of the user. The charging system is configured to receive a request from the policy decision point and return the account data of the user to the policy decision point and determine if variation in the account data of the user reaches a predetermined threshold and send the updated account data to the policy decision point if the variation reaches the threshold. The policy decision point is further configured to re-make a resource reservation policy according to the updated account data and return the re-made resource reservation policy to the network element. The network element is further configured to apply the re-made resource reservation policy and adjust the resource reserved for the user. According to the foregoing technical solutions, the benefits of the embodiments of the present invention are as follows.

In the embodiments of the present invention, a network element receives a service request from a user, and requests a resource reservation policy from a policy decision point. The policy decision point makes a resource reservation policy according to the account data of the user and returns the resource reservation policy to the network element. The network element executes the resource reservation policy and performs the resource reservation for the user. Because the policy decision point performs the resource reservation according to the account data of the user, the impact on the service provision due to the reason that the prior art does not take the variation in user's account data into consideration may be avoided. Therefore, the information for resource reservation may be more comprehensive and the resource reservation procedure may be more customer-friendly and the possibility of a successful service delivery is improved.

### BRIEF DESCRIPTION OF THE DRAWINGS

Figure 1 is a flowchart of a conventional resource reservation procedure;
Figure 2 is a flowchart of a method for resource reservation according to a first embodiment of the present invention;
Figure 3 is a flowchart of a policy decision point making a resource reservation policy according to the user's account data according to one embodiment of the present invention;
Figure 4 is a flowchart of a method for resource reservation according to a second embodiment of the present invention;
Figure 5 is a flowchart of a method for resource reservation according to a third embodiment of the present invention;
Figure 6 is a flowchart of a method for handling a charging failure according to a fourth embodiment of the present invention;
Figure 7 is a block diagram of a policy decision point according to a fifth embodiment of the present invention;
Figure 8 is a block diagram of a policy decision point according to a sixth embodiment of the present invention;
Figure 9 is a block diagram of a charging system according to a sixth embodiment of the present invention;
Figure 10 is a block diagram of a communication system according to a seventh embodiment of the present invention; and
Figure 11 is a block diagram of a communication system according to an eighth embodiment of the present invention.

### DETAILED DESCRIPTION

Methods for resource reservation, methods for handling charging failure, and a policy decision point are provided. Detailed description are made to methods for resource reservation, methods for handling a charging failure, and a policy decision point according to embodiments of the present invention.

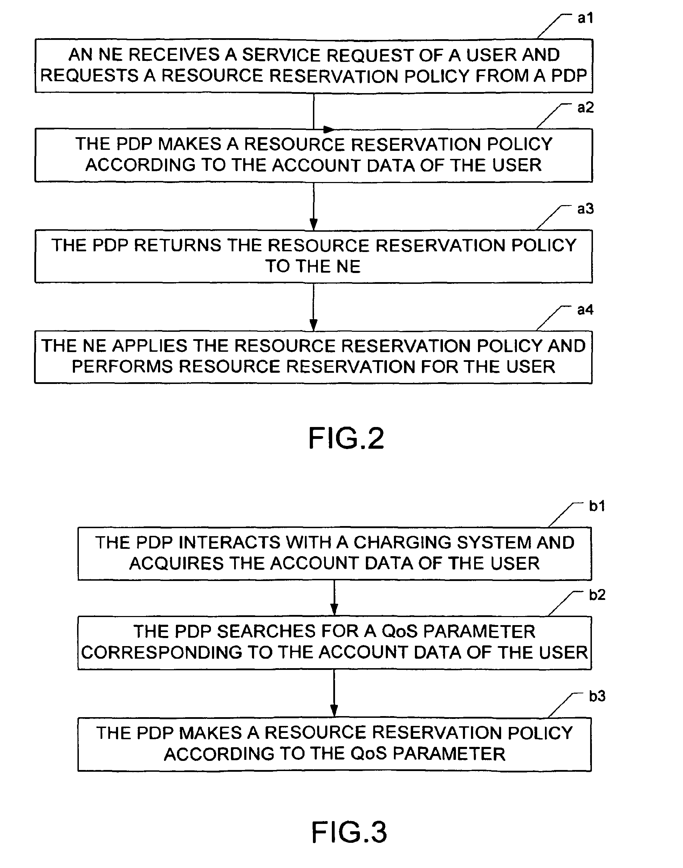

A first embodiment of the present invention involves a method for resource reservation. As illustrated in Figure 2, the method includes the following steps.

Step a1 : A network element (NE) receives a service request of a user, and requests a resource reservation policy from a policy decision point (PDP).

Step a2: The policy decision point makes a resource reservation policy according to the account data of the user.

Referring together to Figure 3, in the present embodiment, the procedure of the policy decision point making a resource reservation policy according to the account data of the user includes the following steps.

Step b1: The policy decision point interacts with a charging system and acquires the account data of the user.

The account data of the user may include account balance and/or reward resources and/or credit limit.

Step b2: The policy decision point searches for a Quality of Service (QoS) parameter corresponding to the account data of the user.

It is to be understood that an association between the account data and the QoS parameter may be stored in the policy decision point locally, or may be stored in a subscription relation base. The policy decision point may interact with the subscription relation base to acquire the association. The subscription relation base may be HLR, HSS etc.

The present embodiment emphasizes that the PDP has the ability to acquire the association. The storage location of the association shall not be interpreted as limitations to the scope of the present invention.

Assuming that the account data refers to account balance, the association between the account balance and the QoS parameter is indicated in Table 1.

**Table 1**

| *Upper Limit for Account Balance (= >)* | *Lower Limit for Account Balance (>)* | *QoS Level* |
|---|---|---|
| *infinite* | *10 Yuan* | *QoS1* |
| *10 Yuan* | *5 Yuan* | *QoS2* |
| *5 Yuan* | *2 Yuan* | *QoS3* |
| *2 Yuan* | *0 Yuan* | *QoS4* |

For instance, at step b1, the account balance of the user acquired by the policy decision point interacting with the charging system is 7 Yuan. By looking up Table 1, the QoS level corresponding to the account balance which is 7 Yuan is QoS2.

Step b3: The policy decision point makes a resource reservation policy according to the QoS parameter.

Resource reservation policy is made based on the QoS2 level. The reserved resource may include a network bandwidth, a port allocation or a channel occupation, etc.

It is appreciated that the resource reservation policy made by the PDP may also be made according to other parameters, such as user's subscription information, a media type requested by the user or encoding type, etc. In the process of making the resource reservation policy, the PDP may interact with other network server, such as a subscription information base, to obtain multifarious information as required to make a resource reservation policy.

Step a3: The PDP returns the resource reservation policy to the NE.

Step a4: The NE applies the resource reservation policy and performs resource reservation for the user.

In the first embodiment of the present invention, the NE receives the service request of the user, and requests a resource reservation policy from the PDP. The PDP makes the resource reservation policy according to the account data of the user and returns the resource reservation policy to the NE. The NE applies the resource reservation policy and performs the resource reservation for the user. Because the PDP performs the resource reservation according to the account data of the user, the impact on the service provision due to the reason that the prior art does not take the variation in user's account data into consideration may be avoided. Therefore, the information for resource reservation may be more comprehensive and the resource reservation procedure may be more customer-friendly.

It is appreciated by those skilled in the art that the entire or partial steps in the above embodiments may be implemented with hardware when the steps are instructed by programs. Such programs may be stored in a computer or in a readable storage media. The program, when executed, may include: receiving, by a network element, a service request of a user, and requesting a resource reservation policy from a policy decision point; making the resource reservation policy by the policy decision point according to the account data of the user and returning the resource reservation policy to the network element; and applying, by the network element, the resource reservation policy and performing resource reservation for the user.

The storage media mentioned above may be a ROM, a magnetic disc or an optical disc, etc.

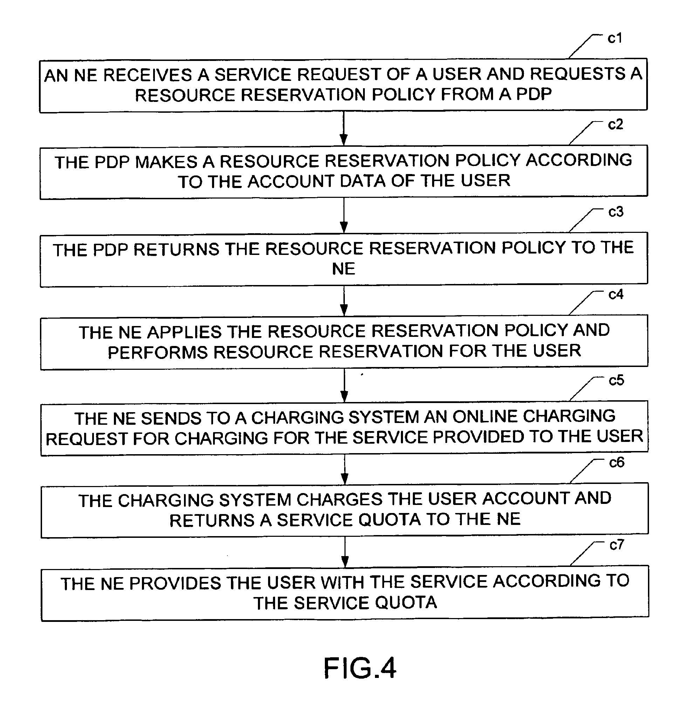

A second embodiment involves a method for resource reservation. As illustrated in Figure 4, the method includes the following steps.

Step c1-step c4 are similar to step a1 ∼ step a4, which are omitted herein for brevity.

Step c5: The network element sends to a charging system an online charging request for charging for the service provided to the user.

In the present embodiment of the present invention, the online charging request is sent in the form of a CCR message.

Step c6: The charging system charges the user account and returns a service quota to the network element.

In the present embodiment, a process during which the charging system charges the user account includes rating control and reservation control, etc. The charging process may be implemented with a conventional method. The method for implementing the charging process shall not be interpreted as limitations to the present invention.

Step c7: The network element provides the user with the service according to the service quota.

Based on the first embodiment, the second embodiment realizes account charging and service provision according to the method for resource reservation of the first embodiment of the present invention.

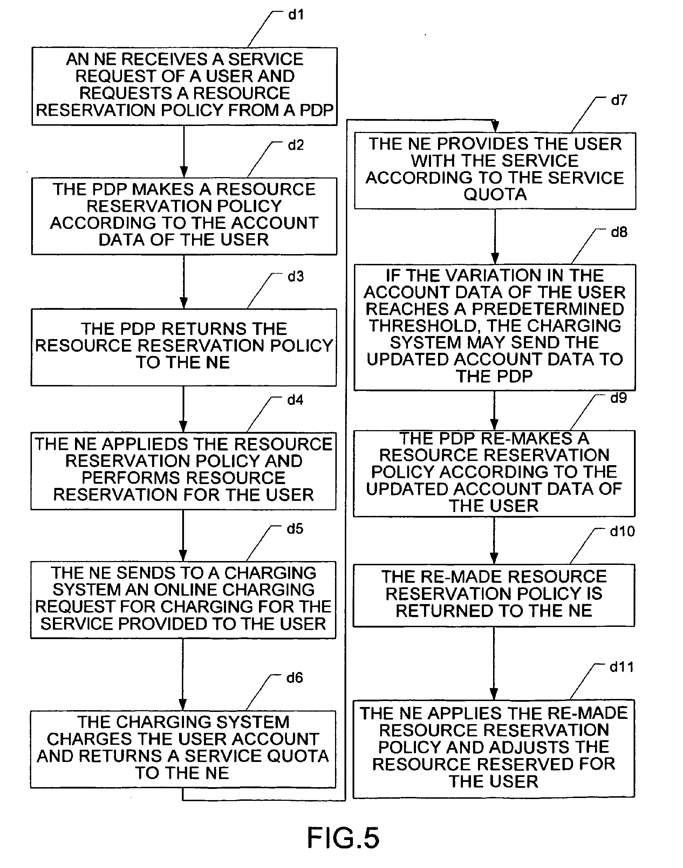

A third embodiment of the present invention involves a method for resource reservation. As illustrated in Figure 5, the method includes the following steps.

Step d1-step d7 are similar to step c1-step c7, which are omitted herein for brevity.

Step d8: In the process during which the network element provides the user with the service, if the charging system determines that variation in the account data of the user reaches a predetermined threshold, the charging system may send an updated account data to the PDP.

Step d9: The PDP re-makes a resource reservation policy according to the updated account data of the user.

The step of re-making the resource reservation policy may refer to step a2 of the first embodiment of the present invention.

Referring to Table 1, if the current account balance of the user is 3 Yuan, QoS3 is required to perform resource reservation.

Step d10: The re-made resource reservation policy is returned to the NE.

Step d11: The NE applies the re-made resource reservation policy and adjusts the resource reserved for the user.

It is appreciated that after the resource reservation is completed, the network element may further send a charging update request to the charging system, reporting QoS information relating to the adjusted reserved resources.

The charging system performs charging operation and returns an authorized service quota.

The difference between the third embodiment and the second embodiment lies in that the charging system monitors the account data of the user in the third embodiment of the present invention. When the variation of the account data reaches a predetermined threshold, the updated account data will be sent to the PDP. The PDP may re-make the resource reservation policy according to the updated account data in order to serve the user better.

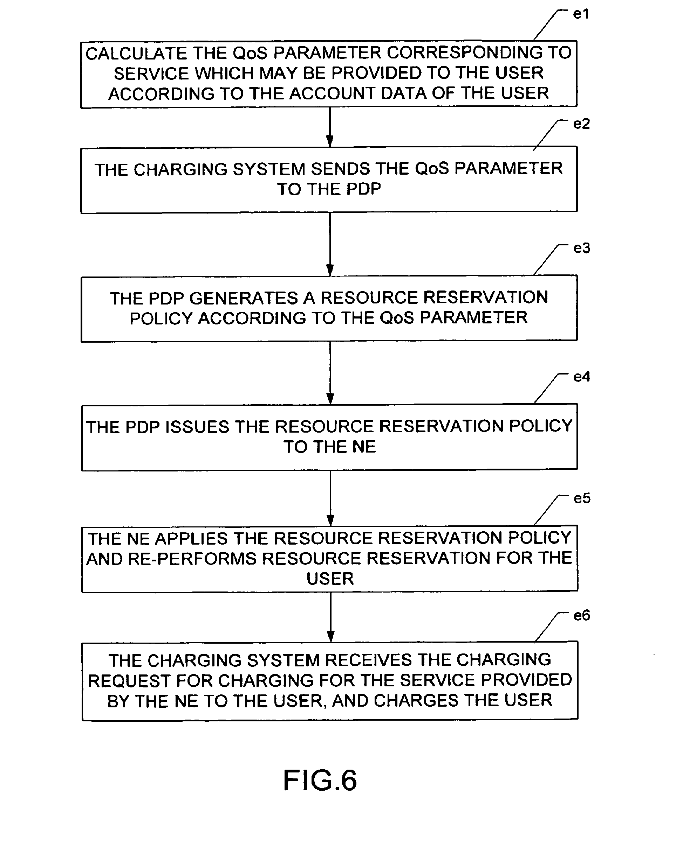

A fourth embodiment of the present invention involves a method for handling a charging failure. As illustrated in Figure 6, the method includes the following steps.

Step e1: After the charging system fails to charge the user, the charging system calculates QoS parameter corresponding to service which may be provided to the user according to the account data of the user.

In the present embodiment of the present invention, the account balance is taken as an example of the account data of the user for illustration in order to specify a process during which the charging system calculates the QoS parameter corresponding to the service which may be provided to the user according to the account data of the user.

The charging system calculates the upper limit of the QoS which may allow for a successful service delivery according to the account balance of the user. The calculating principle is as follows.
T service layer + T content layer + T bearer layer = B
PQoS* Vol<= T bearer layer
T service layer indicates fee required by the service layer.
T content layer indicates fee required by the content layer.
T bearer layer indicates the maximum fee allowable by the bearer layer.
B indicates account balance of the user.
PQoSx indicates charge rate in terms of QoSx.
Vol indicates traffic.
QoSx is the upper limit of the QoS parameter (i.e. UpperQoS) calculated.

The method for calculating the UpperQoS is illustrated in Table 2.

**Table 2**

| QoS Level (UpperQoS Parameter) | Quoto Unit | Charge Rate (PQoSx) |
|---|---|---|
| 1 | 1M | 1Yuan |
| 2 | 1M | 0.8Yuan |
| 3 | 1M | 0.5Yuan |

In the present embodiment of the present invention, the QoS parameter includes a media type and/or encoding and/or bandwidth. It is appreciated that the QoS parameter may further include a service level, time delay and/or jitter, etc.

Step e2: The charging system sends the QoS parameter to the PDP.

In the present embodiment of the present invention, the QoS4 in this step is sent to the PDP.

Step e3: The policy decision point generates a resource reservation policy according to the QoS parameter.

Step e4: The PDP issues the resource reservation policy to the NE.

Step e5: The NE applies the resource reservation policy and re-performs resource reservation for the user.

Step e6: The charging system receives the charging request for charging for the service provided by the NE to the user, and charges the user.

It is appreciated that after the resource reservation, at step e5, is successfully performed and if the charging system receives the charging request for charging the user for the service provided by the NE to the user, the charging system starts charging the user.

It is appreciated that after the charging system sends, at step e2, the QoS parameter to the PDP, the method may further include the following step.

The PDP sends the QoS parameter to the user equipment which requests for the service. If the calculated upper limit of QoS corresponding to the service which may be provided to the user is QoS4, the PDP may send the QoS4 and QoS parameters which have a lower service level than the QoS4 to the user equipment.

If the PDP receives a feedback indicating that the user equipment accepts the QoS parameter, the PDP generates a resource reservation policy according to the QoS parameter in the feedback and issues the resource reservation policy to the NE.

The user equipment may select a QoS parameter among the issued QoS4 and the lower service level QoS parameters and feed back the selected QoS parameter to the PDP.

According to the fourth embodiment of the present invention, in the case where the charging fails as a result of insufficient account balance of the user, QoS which is qualified for providing service may be calculated based on the current account balance of the user account data, and the QoS which is qualified for providing service is returned to the PDP. The PDP re-makes a resource reservation policy, and the PEP re-performs resource reservation. The user enjoys the service with this QoS. Consequently, the possibility of a successful service delivery is enhanced and the network may provide the user with a much better service.

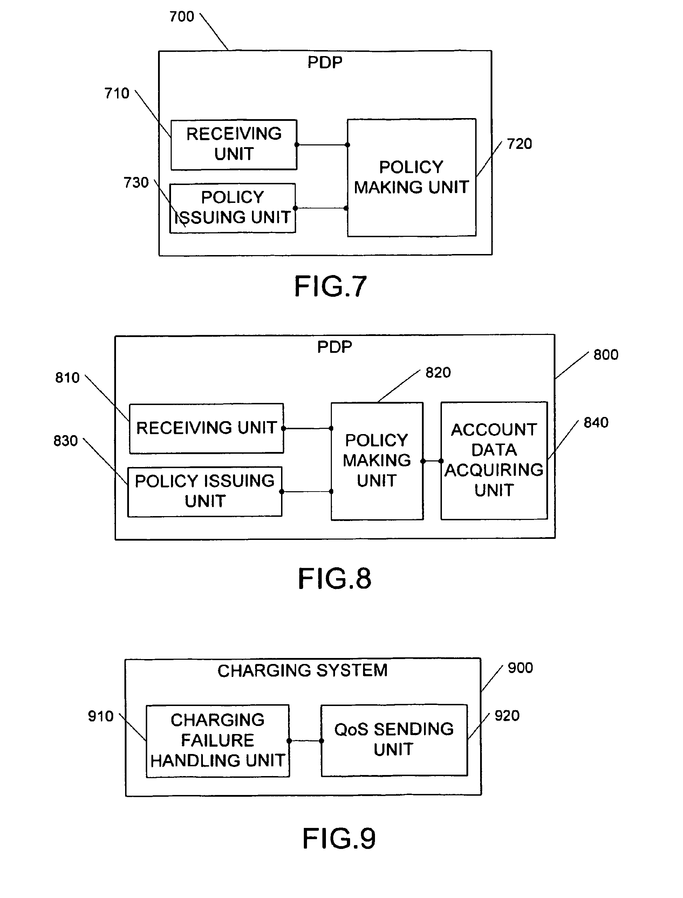

The fifth embodiment of the present invention involves a policy decision point 700. As illustrated in Figure 7, the policy decision point may include a receiving unit 710, a policy making unit 720, and a policy issuing unit 730.

The receiving unit 710 is configured to receive a policy decision request sent by a network element.

The policy making unit 720 is configured to make a resource reservation policy according to account data of the user. It is appreciated that the account data of the user may be stored in the policy decision point locally, or may be acquired by the policy decision point by interacting with the other network element storing the account information of the user.

The policy issuing unit 730 is configured to return the resource reservation policy made by the policy making unit 720 to the network element.

A sixth embodiment of the present invention involves a policy decision point 800. As illustrated in Figure 8, the policy decision point may include a receiving unit 810, a policy making unit 820, a policy issuing unit 830 and an account data acquiring unit 840.

The receiving unit 810 is configured to receive a policy decision request sent by a network element.

The account data acquiring unit 840 is configured to interact with a charging system to acquire the account data of the user.

The policy making unit 820 is configured to make a resource reservation policy according to the account data of the user.

The policy issuing unit 830 is configured to return the resource reservation policy made by the policy making unit 820 to the network element.

A seventh embodiment of the present invention involves a charging system 900. As illustrated in Figure 9, the charging system 900 may include a charging failure handling unit 910 and a QoS parameter sending unit 920.

The charging failure handling unit 910 is configured to calculate, based on the account data of the user, a QoS parameter corresponding to a service which may be provided to the user after the charging to the user fails.

In the present embodiment of the present invention, the account data is the account balance of the user. The charging failure handling unit 910 may calculate, based on the account balance of the user, the QoS parameter corresponding to a service which may be provided to the user. The calculating method may refer to step c1 in the third embodiment of the present invention.

The QoS parameter sending unit 920 is configured to send the QoS parameter to the point decision point.

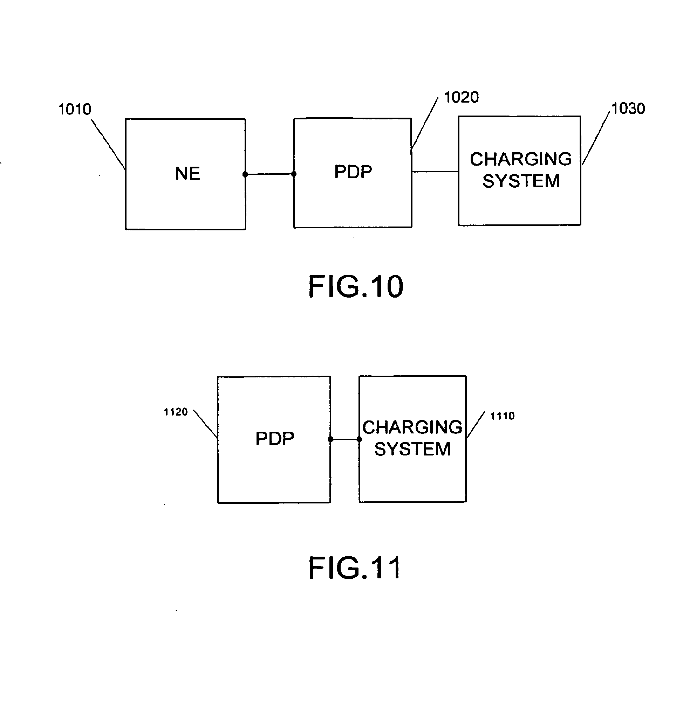

An eighth embodiment of the present invention involves a communication system. As illustrated in Figure 10, the communication system may include a network element 1010, a policy decision point 1020 and a charging system 1030. The network element 1010 is configured to receive a service request from the user, requests a resource reservation policy from the policy decision point, applies the resource reservation policy returned by the policy decision point 1020 and performs the resource reservation policy for the user.

The policy making point 1020 is configured to request the account data of the user from the charging system, make a resource reservation policy according to the account data of the user returned by the charging system, and return the resource reservation policy to the network element 1010.

The charging system 1030 is configured to receive the request from the policy decision point 1020 and return the account data of the user to the policy decision point 1020.

It is appreciated that the charging system 1030 may further be configured to determine if variation in the user's account data has reached a predetermined threshold. If the variation in the user's account data has reached a predetermined threshold, the charging system 1030 may send updated account data to the policy decision point 1020.

The policy decision point 1020 may further be configured to re-make a resource reservation policy according to the updated account data of the user and return the re-made resource reservation policy to the network element 1010.

The network element 1010 applies the re-made resource reservation policy and adjusts the resource reserved for the user.

A ninth embodiment of the present invention involves a communication system. As illustrated in Figure 11, the communication system may include a charging system 1110 and a policy decision point 1120.

The charging system 1110 is configured to calculate, based on the account data of the user, a QoS parameter corresponding to the service which may be provided to the user after the charging to the user fails, and send the QoS parameter to the policy decision point.

The policy decision point 1120 generates a resource reservation policy according to the QoS parameter and issues the resource reservation policy to the network element which provides user with the service.

Detailed introduction has been made to a method for resource reservation, a method for handling charging failure, and a policy decision point according to the embodiments of the present invention.

In the first embodiment of the present invention, the NE receives the service request of the user, and requests a resource reservation policy from the PDP. The PDP makes a resource reservation policy according to the account data of the user and returns the resource reservation policy to the NE. The NE applies the resource reservation policy and performs the resource reservation for the user. Because the PDP performs the resource reservation according to the account data of the user, the impact on the service provision due to the reason that the prior art does not take the variation in user's account data into consideration may be avoided. Therefore, the information for resource reservation may be more comprehensive and the resource reservation procedure may be more customer-friendly.

In another embodiment of the present invention, the charging system monitors the account data of the user. When a variation of the account data reaches a predetermined threshold, the updated account data will be sent to the PDP. The PDP may re-make the resource reservation policy according to the updated account data in order to serve the user better.

According to yet another embodiment of the present invention, in the case where the charging fails as a result of insufficient account balance of the user, a QoS corresponding to the service which is qualified for provide to the user may be calculated based on the current account balance of the user account data, and the QoS corresponding to the service which is qualified for user is returned to the PDP. The PDP re-makes a resource reservation policy, and the PEP re-performs a resource reservation. The user may enjoy the service with such QoS. Consequently, the possibility of a successful service delivery is enhanced and the network may provide the user with a much better service.

In accordance with the principle of the embodiments of the present invention, a person with ordinary skill in the art may make variation in the specific implementation of the embodiments and in the application fields. Therefore, the Specification shall not be construed as a limitation to the scope of the present invention.

## Claims

1. A method for resource reservation, comprising:
receiving, by a network element, a service request of a user, and requesting a resource reservation policy from a policy decision point (101);
making, by the policy decision point, a resource reservation policy (102) according to account data of the user and returning the resource reservation policy to the network element (103), wherein the account data of the user comprises account balance and/or reward resources and/or credit limit; and
applying, by the network element, the resource reservation policy and performing resource reservation for the user (104), wherein before the policy decision point makes the resource reservation policy according to the account data of the user: interacting, by the policy decision point, with a charging system; receiving, by the charging system, a request from the policy decision point, and returning the account data of the user to the policy decision point; and obtaining, by the policy decision point, the account data of the user;
sending, by the network element, to the charging system an online charging request for charging for a service provided to the user (105),
charging, by the charging system, a user account (106, 107) and returning a service quota to the network element (108); and
providing, by the network element, the service for the user according to the service quota; **characterized in that** the method further comprises:
sending, by the charging system in the process of the network element providing the service for the user, an updated account data to the policy decision point if a variation in the account data of the user reaches a predetermined threshold ;
re-making, by the policy decision point, the resource reservation policy according to the updated account data of the user and returning the re-made resource reservation policy to the network element; and
applying, by the network element, the re-made resource reservation policy and adjusting the resource reserved for the user.

2. The method of claim 1, **characterized in that**, the step of making the resource reservation policy comprises:
searching, by the policy decision point, for a Quality of Service, QoS, parameter associated with the account data of the user; and
making the resource reservation policy according to the QoS parameter.

3. A communication system, comprising a network element , a policy decision point (700, 800) and a charging system (900), wherein
the network element is configured to receive a service request of a user, request a resource reservation policy from the policy decision point, apply the resource reservation policy returned from the policy decision point and perform resource reservation for the user, send to the charging system an online charging request for charging for the service provided to the user, receive a service quota returned by the charging system and provide the service for the user according to the service quota, receive a re-made resource reservation policy from the policy decision point and apply the re-made resource reservation policy and adjust the resource reserved for the user;
the policy decision point comprises: a receiving unit, a policy making unit, an account data acquiring unit and a policy issuing unit, wherein the receiving unit is configured to receive a policy decision request sent by a network element;
the policy making unit is configured to make the resource reservation policy according to account data of the user, wherein the account data of the user comprises account balance and/or reward resources and/or credit limit;
the policy issuing unit is configured to return the resource reservation policy made by the policy making unit to the network element; and the account data acquiring unit is configured to interact with the charging system to acquire the account data of the user; **characterized in that**:
the charging system is configured to receive a request from the policy decision point and return the account data of the user to the policy decision point before the policy decision point makes the resource reservation policy according to the account data of the user, receive an online charging request for charging for a service provided to the user, charge a user account and return a service quota to the network element; and determine if variation in the account data of the user reaches a predetermined threshold and send the updated account data to the policy decision point if the variation reaches the threshold;
the policy decision point is further configured to re-make the resource reservation policy according to the updated account data and return the re-made resource reservation policy to the network element;
the network element is further configured to apply the re-made resource reservation policy and adjust the resource reserved for the user.

## Patentansprüche

1. Verfahren zur Ressourcenreservierung, umfassend:
Empfangen einer Dienstanforderung eines Benutzers durch ein Netzelement und Anfordern einer Ressourcenreservierungsrichtlinie von einem Richtlinienentscheidungspunkt (101);
Herstellen einer Ressourcenreservierungsrichtlinie (102) durch den Richtlinienentscheidungspunkt gemäß Kontodaten des Benutzers und Zurückgeben der Ressourcenreservierungsrichtlinie an das Netzelement (103), wobei die Kontodaten des Benutzers Kontostand und/oder Belohnungsressourcen und/oder Kreditgrenze umfassen; und
Anwenden der Ressourcenreservierungsrichtlinie durch das Netzelement und Durchführen von Ressourcenreservierung für den Benutzer (104), wobei, bevor der Richtlinienentscheidungspunkt die Ressourcenreservierungsrichtlinie gemäß den Kontodaten des Benutzers herstellt, Folgendes erfolgt: Interagieren mit einem Vergebührungssystem durch den Richtlinienentscheidungspunkt; Empfangen einer Anforderung von dem Richtlinienentscheidungspunkt durch das Vergebührungssystem und Zurückgeben der Kontodaten des Benutzers an den Richtlinienentscheidungspunkt; und Erhalten der Kontodaten des Benutzers durch den Richtlinienentscheidungspunkt;
Senden einer Online-Vergebührungsanforderung zur Vergebührung für einen dem Benutzer bereitgestellten Dienst (105) durch das Netzelement zu dem Vergebührungssystem;
Vergebühren eines Benutzerkontos (106, 107) durch das Vergebührungssystem und Zurückgeben eines Dienstquotums an das Netzelement (108); und
Bereitstellen des Dienstes für den Benutzer durch das Netzelement gemäß dem Dienstquotum; **dadurch gekennzeichnet, dass** das Verfahren ferner Folgendes umfasst:
Senden von aktualisierten Kontodaten zu dem Richtlinienentscheidungspunkt durch das Vergebührungssystem im Verlauf des Bereitstellens des Dienstes für den Benutzer durch das Netzelement, wenn eine Variation in den Kontodaten des Benutzers eine vorbestimmte Schwelle erreicht;
Neuherstellen der Ressourcenreservierungsrichtlinie durch den Richtlinienentscheidungspunkt gemäß den aktualisierten Kontodaten des Benutzers und Zurückgeben der neu hergestellten Ressourcenreservierungsrichtlinie an das Netzelement; und
Anwenden der neu hergestellten Ressourcenreservierungsrichtlinie durch das Netzelement und Justieren der für den Benutzer reservierten Ressource.

2. Verfahren nach Anspruch 1, **dadurch gekennzeichnet, dass** der Schritt des Herstellens der Ressourcenreservierungsrichtlinie Folgendes umfasst:
Suchen nach einem mit den Kontodaten des Benutzers assoziierten Dienstgüte- bzw. QoS-Parameter durch den Richtlinienentscheidungspunkt; und
Herstellen der Ressourcenreservierungsrichtlinie gemäß dem QoS-Parameter.

3. Kommunikationssystem, das ein Netzelement, einen Richtlinienentscheidungspunkt (700, 800) und ein Vergebührungssystem (900) umfasst, wobei
das Netzelement dafür ausgelegt ist, eine Dienstanforderung eines Benutzers zu empfangen, eine Ressourcenreservierungsrichtlinie von dem Richtlinienentscheidungspunkt anzufordern, die von dem Richtlinienentscheidungspunkt zurückgegebene Ressourcenreservierungsrichtlinie anzuwenden und Ressourcenreservierung für den Benutzer durchzuführen, eine Online-Vergebührungsanforderung zum Vergebühren für den dem Benutzer bereitgestellten Dienst zu dem Vergebührungssystem zu senden, ein von dem Vergebührungssystem zurückgegebenes Dienstquotum zu empfangen und den Dienst für den Benutzer gemäß dem Dienstquotum bereitzustellen, eine neu hergestellte Ressourcenreservierungsrichtlinie von dem Richtlinienentscheidungspunkt zu empfangen und die neu hergestellte Ressourcenreservierungsrichtlinie anzuwenden und die für den Benutzer reservierte Ressource zu justieren;
der Richtlinienentscheidungspunkt Folgendes umfasst: eine Empfangseinheit, eine Richtlinienherstellungseinheit, eine Kontodaten-Beschaffungseinheit und eine Richtlinienausgabeeinheit, wobei die Empfangseinheit dafür ausgelegt ist, eine durch ein Netzelement gesendete Richtlinienentscheidungsanforderung zu empfangen;
die Richtlinienherstellungseinheit dafür ausgelegt ist, die Ressourcenreservierungsrichtlinie gemäß Kontodaten des Benutzers herzustellen, wobei die Kontodaten des Benutzers Kontostand und/oder Belohnungsressourcen und/oder Kreditgrenze umfassen;
die Richtlinienausgabeeinheit dafür ausgelegt ist, die durch die Richtlinienherstellungseinheit hergestellte Ressourcenreservierungsrichtlinie an das Netzelement zurückzugeben; und die Kontodaten-Beschaffungseinheit dafür ausgelegt ist, mit dem Vergebührungssystem zu interagieren, um die Kontodaten des Benutzers zu beschaffen;
**dadurch gekennzeichnet, dass**
das Vergebührungssystem dafür ausgelegt ist, eine Anforderung von dem Richtlinienentscheidungspunkt zu empfangen und die Kontodaten des Benutzers an den Richtlinienentscheidungspunkt zurückzugeben, bevor der Richtlinienentscheidungspunkt die Ressourcenreservierungsrichtlinie gemäß den Kontodaten des Benutzers herstellt, eine Online-Vergebührungsanforderung zur Vergebührung für einen dem Benutzer bereitgestellten Dienst zu empfangen, ein Benutzerkonto zu belasten und ein Dienstquotum an das Netzelement zurückzugeben; und zu bestimmen, ob Variation in den Kontodaten des Benutzers eine vorbestimmte Schwelle erreicht, und die aktualisierten Kontodaten zu dem Richtlinienentscheidungspunkt zu senden, wenn die Variation die Schwelle erreicht; der Richtlinienentscheidungspunkt ferner dafür ausgelegt ist, die Ressourcenreservierungsrichtlinie gemäß den aktualisierten Kontodaten neu herzustellen und die neu hergestellte Ressourcenreservierungsrichtlinie an das Netzelement zurückzugeben; und
das Netzelement ferner dafür ausgelegt ist, die neu hergestellte Ressourcenreservierungsrichtlinie anzuwenden und die für den Benutzer reservierte Ressource zu justieren.

## Revendications

1. Procédé de réservation de ressources, comprenant :
la réception, par un élément de réseau, d'une demande de service d'un utilisateur, et la demande d'une politique de réservation de ressources à un point de décision de politique (101) ;
la définition, par le point de décision de politique, d'une politique de réservation de ressources (102) conformément à des données de compte de l'utilisateur et le renvoi de la politique de réservation de ressources à l'élément de réseau (103), les données de compte de l'utilisateur comprenant un solde de compte et/ou des ressources de récompense et/ou une limite de crédit ; et
l'application, par l'élément de réseau, de la politique de réservation de ressources et l'exécution d'une réservation de ressources pour l'utilisateur (104), cela comprenant, avant que le point de décision de politique définisse la politique de réservation de ressources conformément aux données de compte de l'utilisateur : l'interaction, par le point de décision de politique, avec un système de facturation ; la réception, par le système de facturation, d'une demande provenant du point de décision de politique, et le renvoi des données de compte de l'utilisateur au point de décision de politique ; et
l'obtention, par le point de décision de politique, des données de compte de l'utilisateur ;
l'envoi, par l'élément de réseau, au système de facturation, d'une demande de facturation en ligne pour facturer un service fourni à l'utilisateur (105) ;
la facturation, par le système de facturation, d'un compte d'utilisateur (106, 107) et le renvoi d'un quota de service à l'élément de réseau (108) ; et
la fourniture, par l'élément de réseau, du service à l'utilisateur conformément au quota de service ; **caractérisé en ce que** le procédé comprend en outre :
l'envoi, par le système de facturation, pendant le processus lors duquel l'élément de réseau fournit le service à l'utilisateur, de données de compte mises à jour au point de décision de politique si une variation des données de compte de l'utilisateur atteint un seuil prédéterminé ;
le redéfinition, par le point de décision de politique, de la politique de réservation de ressources conformément aux données de compte mises à jour de l'utilisateur et le renvoi de la politique de réservation de ressources redéfinies à l'élément de réseau ; et l'application, par l'élément de réseau, de la politique de réservation de ressources redéfinie et l'ajustement des ressources réservées à l'utilisateur.

2. Procédé selon la revendication 1, **caractérisé en ce que** l'étape de définition de la politique de réservation de ressources comprend :
la recherche, par le point de décision de politique, d'un paramètre de Qualité de service, QoS (Quality of Service), associé aux données de compte de l'utilisateur ; et
la définition de la politique de réservation de ressources conformément au paramètre de QoS.

3. Système de communication, comprenant un élément de réseau, un point de décision de politique (700, 800) et un système de facturation (900), dans lequel :
l'élément de réseau est configuré pour recevoir une demande de services d'un utilisateur, pour demander une politique de réservation de ressources au point de décision de politique, pour appliquer la politique de réservation de ressources renvoyée par le point de décision de politique et exécuter la réservation de ressources pour l'utilisateur, pour envoyer au système de facturation une demande de facturation en ligne afin de facturer le service fourni à l'utilisateur, pour recevoir un quota de service renvoyé par le système de facturation et fournir le service à l'utilisateur conformément au quota de service, pour recevoir une politique de réservation de ressources redéfinie du point de décision de politique et appliquer la politique de réservation de ressources redéfinie et ajuster les ressources réservées à l'utilisateur ;
le point de décision de politique comprend : une unité de réception, une unité de définition de politique, une unité d'acquisition de données de compte et une unité d'émission de politique, l'unité de réception étant configurée pour recevoir une demande de décision de politique envoyée par un élément de réseau ;
l'unité de définition de politique est configurée pour définir la politique de réservation de ressources conformément aux données de compte de l'utilisateur, les données de compte de l'utilisateur comprenant un solde de compte et/ou des ressources de récompense et/ou une limite de crédit ;
l'unité d'émission de politique est configurée pour renvoyer la politique de réservation de ressources définie par l'unité de définition de politique à l'élément de réseau ; et l'unité d'acquisition de données de compte est configurée pour interagir avec le système de facturation afin d'acquérir les données de compte de l'utilisateur ;
**caractérisé en ce que** :
le système de facturation est configuré pour recevoir une demande du point de décision de politique et renvoyer les données de compte de l'utilisateur au point de décision de politique avant que le point de décision de politique définisse la politique de réservation de ressources conformément aux données de compte de l'utilisateur, pour recevoir une demande de facturation en ligne afin de facturer un service fourni à l'utilisateur, pour facturer un compte de l'utilisateur et renvoyer un quota de service à l'élément de réseau ; et pour déterminer si une variation des données de compte de l'utilisateur atteint un seuil prédéterminé et envoyer les données de compte mises à jour au point de décision de politique si la variation atteint le seuil ;
le point de décision de politique est en outre configuré pour redéfinir la politique de réservation de ressources conformément aux données de compte mises à jour et renvoyer la politique de réservation de ressources redéfinie à l'élément de réseau ; l'élément de réseau est en outre configuré pour appliquer la politique de réservation de ressources redéfinie et ajuster la ressource réservée à l'utilisateur.
